# EUROPEAN PATENT APPLICATION

(11) **EP 4 527 528 A1**
(43) Date of publication of application: **26.03.2025**
(21) Application number: 24183870.5
(22) Date of filing: 22.06.2024
(51) Int. Cl.: B23B 51/00

(54) **STEP DRILL**

(30) Priority: 22.09.2023 TW 112136297
(71) Applicant: Shajeng Hardware Co., Ltd., Taichung City 412 (TW)
(72) Inventor: Liao, Jen-Tsung, 412 Taichung City (TW)
(74) Representative: Lang, Christian

(57) **Abstract**

A step drill (10) includes a stepped cone (12) formed with a tip (13) and a bottom (14), a shank (15) extending from the bottom (14), and steps (16) formed between the tip (13) and the bottom (14). The stepped cone (12) includes a transitional portion (20) formed on one of the steps (16). There is a first length (L1) between the transitional portion and the tip. There is a second length (L2) between the transitional portion and the bottom. The stepped cone (12) includes four helical grooves (21, 22, 23, 24). The first and second helical grooves (21, 22) are located opposite to each other. The third and fourth helical grooves (23, 24) are located opposite to each other. The first and second helical grooves (21, 22) extend from the tip (13). The third and fourth helical grooves (23, 24) extend from the transitional portion (20) .to the bottom (14).

## Description

### BACKGROUND OF INVENTION

### 1. FIELD OF INVENTION

The present invention relates to a drill and, more particularly, to a step drill.

### 2. RELATED PRIOR ART

A conventional step drill includes a stepped cone formed with two helical grooves. Each of the helical grooves extends between a tip and a bottom. The step drill vibrates considerably in operation or rotation due to insufficient concentricity. Furthermore, the step drill is inefficient in operation because the two helical grooves cause only two helical cutting edges. Moreover, in operation, the step drill generates a lot of heat due to friction at a large interface between the step drill and a workpiece. It is difficult to dissipate such heat for lacking space. Hence, pauses are often needed to lower the temperature of the step drill in a drilling operation. The drilling operation is inefficient. The step drill can be damaged because of excessive heat.

CN203592177U discloses another step drill including a stepped cone formed with a tip, a bottom, and four to six helical grooves. Each of the helical grooves extends between the tip and bottom of the stepped cone. The step drill which includes four to six helical grooves overcomes the problems with the step drill which includes only two helical grooves. However, problems are encountered in the operation of the second step drill. For example, there is no room for four to six helical grooves adjacent to the tip. The portion of the step drill near the tip is vulnerable to damage or even breach since it is weak with the 4 to 6 helical grooves cut in it. Moreover, debris produced by drilling a workpiece tends to jam the helical grooves since they are constant in width or broadness.

The present invention is therefore intended to obviate or at least alleviate the problems encountered in the prior art.

### SUMMARY OF INVENTION

It is an objective of the present invention to provide a step drill that causes a relatively amount of vibration in operation.

It is another objective of the present invention to provide a step drill that generates a relatively amount of heat in operation.

It is still another objective of the present invention to provide a strong step drill.

To achieve the foregoing objectives, the step drill includes a stepped cone formed with a tip and a bottom, a shank extending from the bottom, and steps formed between the tip and the bottom. The stepped cone includes a transitional portion formed on one of the steps. There is a first length between the transitional portion and the tip. There is a second length between the transitional portion and the bottom. The stepped cone includes four helical grooves. The first and second helical grooves are located opposite to each other. The third and fourth helical grooves are located to each other. The first and second helical grooves extend from the tip. The third and fourth helical grooves extend from the transitional portion to the bottom.

Other objectives, advantages and features of the present invention will be apparent from the following description referring to the attached drawings.

### BRIEF DESCRIPTION OF DRAWINGS

The present invention will be described via detailed illustration of two embodiments referring to the drawings wherein:
FIG. 1 is a side view of the step drill according to the first embodiment of the present invention;
FIG. 2 is another side view of the step drill shown in FIG. 1;
FIG. 3 is a front view of the step drill shown in FIG. 1;
FIG. 4 is a rear view of the step drill shown in FIG. 1;
FIG. 5 is a top view of the step drill shown in FIG. 1;
FIG. 6 is a bottom view of the step drill shown in FIG. 1;
FIG. 7 is a side view of the step drill according to the second embodiment of the present invention;
FIG. 8 is another side view of the step drill shown in FIG. 7;
FIG. 9 is a front view of the step drill shown in FIG. 7;
FIG. 10 is a rear view of the step drill shown in FIG. 7;
FIG. 11 is a top view of the step drill shown in FIG. 7; and
FIG. 12 is a bottom view of the step drill shown in FIG. 7.

### DETAILED DESCRIPTION OF EMBODIMENTS

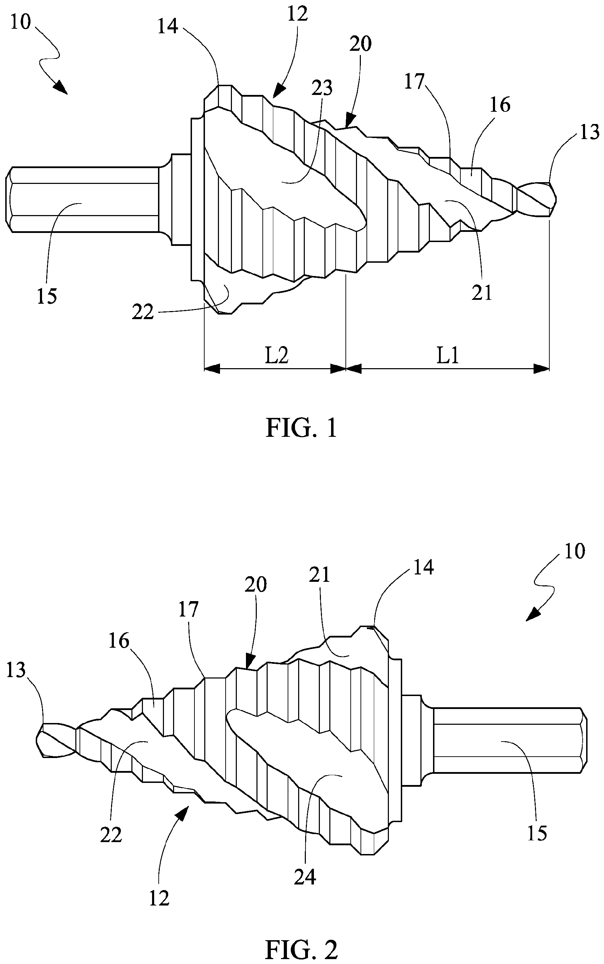

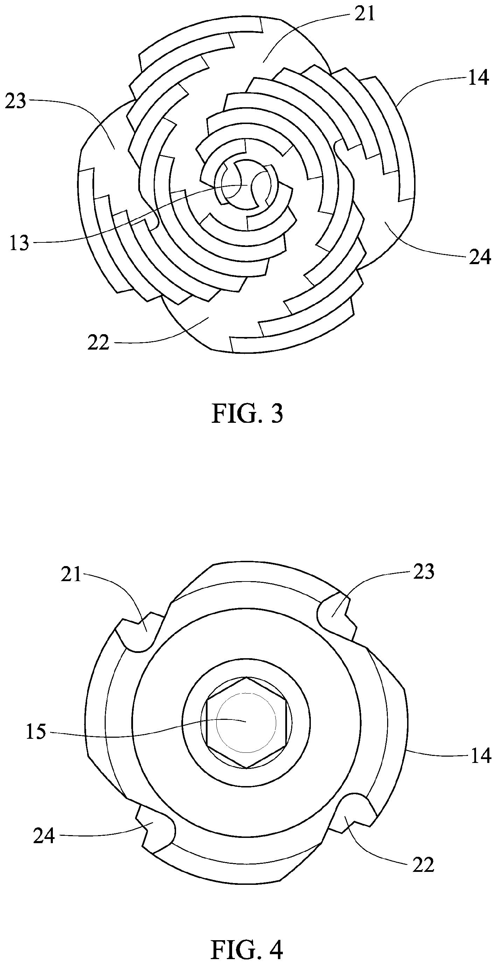

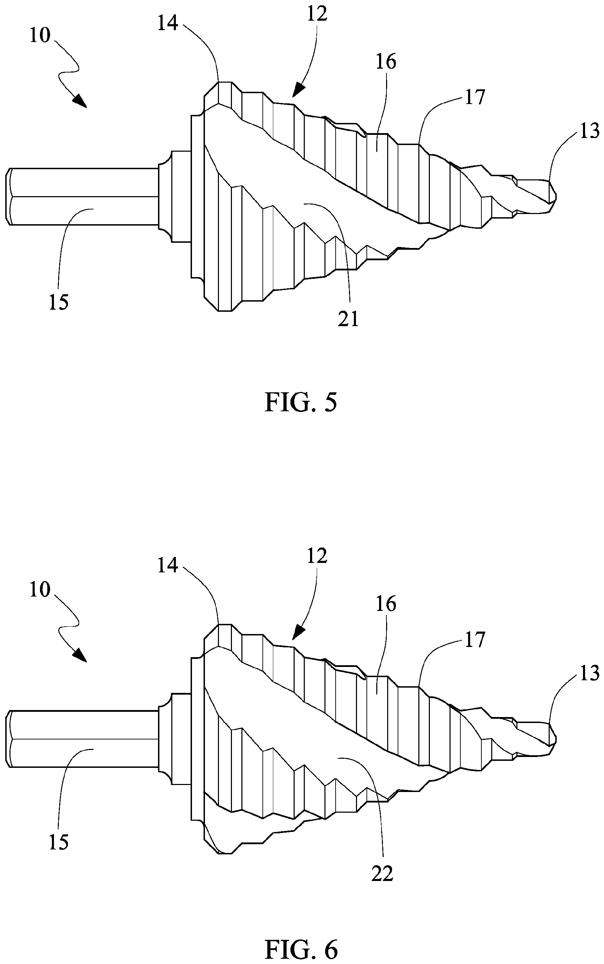

Referring to FIGS. 1 through 6, a step drill 10 includes a stepped cone 12 formed with a tip 13 at an end and a bottom 14 at another end, a shank 15 extending from the bottom 14, and steps 16 formed between the tip 13 and bottom 14 according to a first embodiment of the present invention. The stepped cone 12 is coaxial with the shank 15. The tip 13 is smaller than the bottom 14 in diameter. The diameters of the steps 16 get larger toward the bottom 14 from the tip 13. Each of the steps 16 includes a cutting portion 17.

The stepped cone 12 includes a transitional portion 20 on any of the steps 16. There is a length L1 between the transitional portion 20 and the tip 13. There is a length L2 between the transitional portion 20 and the bottom 14. The length L1 can be equal to the length L2, i.e., the transitional portion 20 is formed on a middle one of the steps 16 of the stepped cone 12. However, the length L1 can be smaller or larger than the length L2. Preferably, the length L1 is larger than the length L2.

The stepped cone 12 includes four helical grooves 21, 22, 23, and 24 evenly cut in the surface. That is, the angle between the helical grooves 21 and 23, the angle between the helical grooves 23 and 22, the angle between the helical grooves 22 and 24 and the angle between the helical grooves 24 and 21 are equal to one another.

The helical grooves 21 and 22 extend from the tip 13 of the stepped cone 12 to the bottom 14 of the stepped cone 12. Preferably, the depth of each of the helical grooves 21 and 22 gets larger from the tip 13 to the bottom 14. However, the depth of each of the helical grooves 21 can be constant from the tip 13 to the bottom 14. Preferably, the width or broadness of each of the helical grooves 21 and 22 gets larger from the tip 13 to the bottom 14. However, the width or broadness of each of the helical grooves 21 and 22 can be constant from the tip 13 to the bottom 14.

The helical grooves 23 and 24 extend from the transitional portion 20 of the stepped cone 12 to the bottom 14 of the stepped cone 12. Preferably, the depth of each of the helical grooves 23 and 24 gets larger from the transitional portion 20 to the bottom 14. However, the depth of each of the helical grooves 23 and 24 can be constant from the transitional portion 20 to the bottom 14. Preferably, the width or broadness of each of the helical grooves 23 and 24 gets larger from the transitional portion 20 to the bottom 14. However, the width or broadness of each of the helical grooves 23 and 24 can be constant from the transitional portion 20 to the bottom 14.

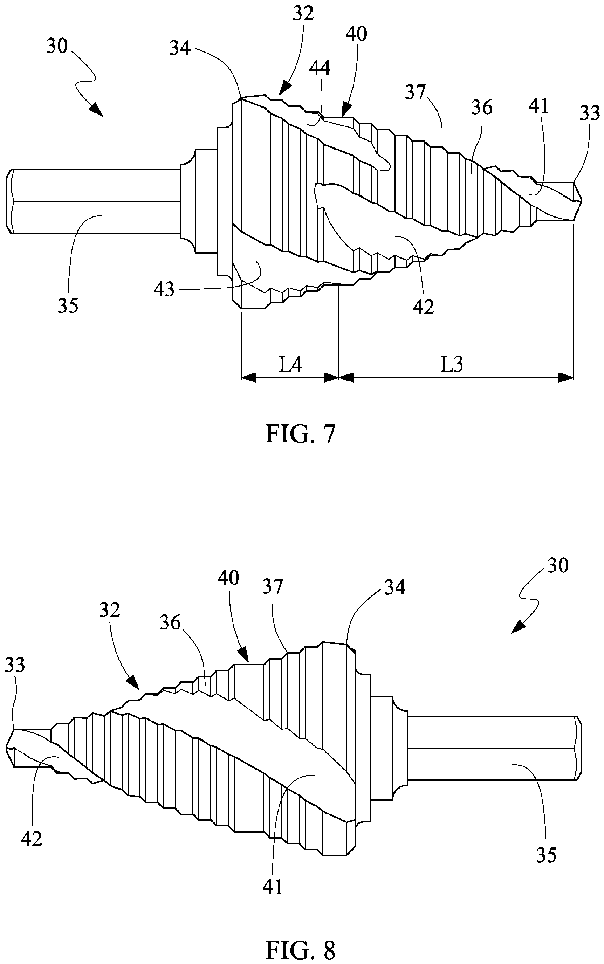

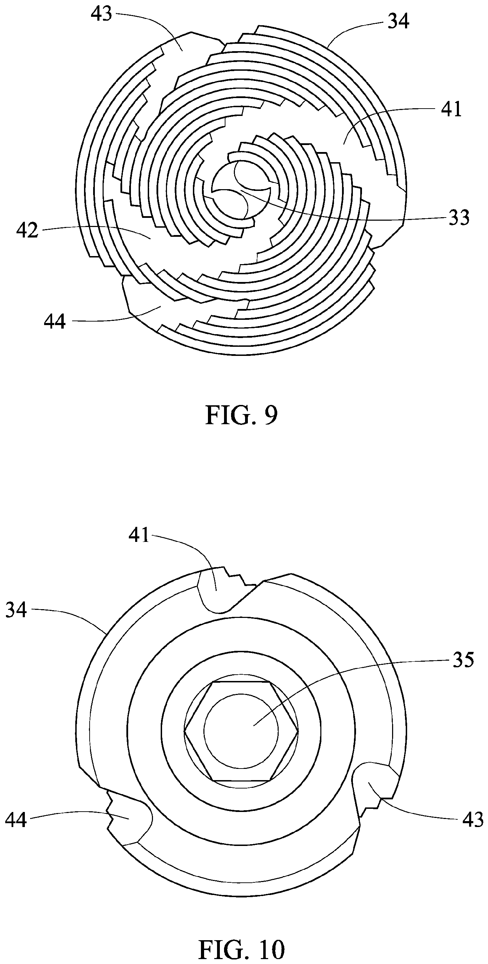

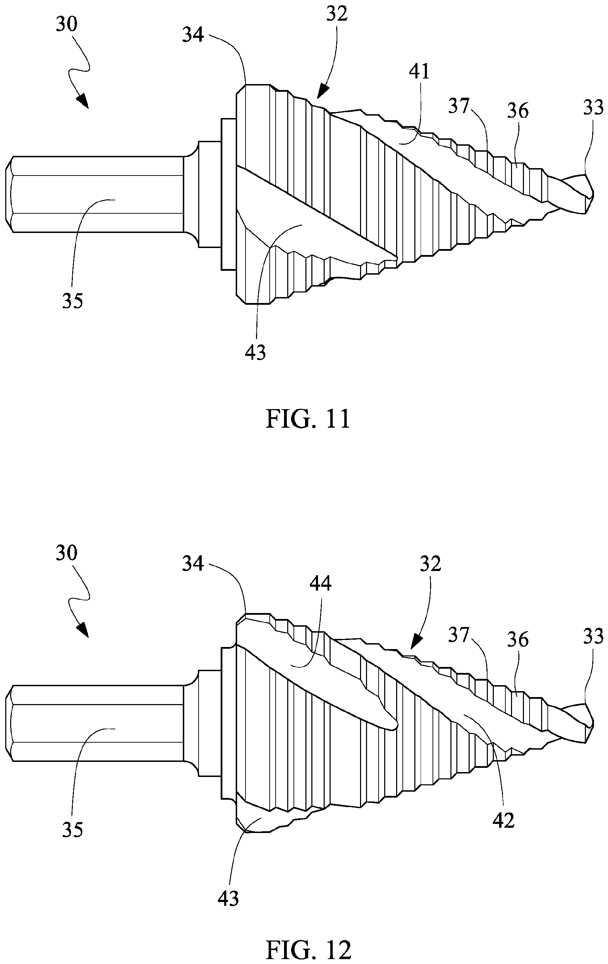

Referring to FIGS. 7 through 12, a step drill 30 includes a stepped cone 32 formed with a tip 33 at an end and a bottom 34 at another end, a shank 35 extending from the bottom 34, and steps 36 formed between the tip 33 and bottom 34 according to a second embodiment of the present invention. The tip 33 is smaller than the bottom 34 in diameter. The diameters of the steps 36 get larger toward the bottom 34 from the tip 33. Each of the steps 36 includes a cutting portion 37.

The stepped cone 32 includes a transitional portion 40 on any of the steps 36. There is a length L4 between the transitional portion 40 and the tip 33. There is a length L4 between the transitional portion 40 and the bottom 34. The length L3 can be equal to the length L4, i.e., the transitional portion 40 is formed on a middle one of the steps 36 of the stepped cone 32. However, the length L3 can be smaller or larger than the length L4. Preferably, the length L3 is larger than the length L4.

The stepped cone 32 includes four helical grooves 41, 42, 43, and 44 cut in the surface. The helical grooves 41 and 42 are located opposite to each other.

The helical groove 41 extends from the tip 33 to the bottom 34. The helical groove 42 extends from the tip 33 to the transitional portion 40. That is, the helical groove 41 extends longer than the helical groove 42. Preferably, the depth of each of the helical grooves 41 and 42 gets larger from the tip 33 to the bottom 34. However, the depth of each of the helical grooves 41 can be constant from the tip 33 to the bottom 34. Preferably, the width or broadness of each of the helical grooves 41 and 42 gets larger from the tip 33 to the bottom 34. However, the width or broadness of each of the helical grooves 41 and 42 can be constant from the tip 33 to the bottom 34.

The helical grooves 43 and 44 extend from the transitional portion 40 to the bottom 34. Preferably, the depth of each of the helical grooves 43 and 44 gets larger from the transitional portion 40 to the bottom 34. However, the depth of each of the helical grooves 43 and 44 can be constant from the transitional portion 40 to the bottom 34. Preferably, the width or broadness of each of the helical grooves 43 and 44 gets larger from the transitional portion 40 to the bottom 34. However, the width or broadness of each of the helical grooves 43 and 44 can be constant from the transitional portion 40 to the bottom 34.

The present invention has been described via the illustration of the embodiments. Those skilled in the art can derive variations from the embodiments without departing from the scope of the present invention. Therefore, the embodiments shall not limit the scope of the present invention defined in the claims.

## Claims

1. A step drill comprising a stepped cone (12) formed with a tip (13) and a bottom (34), a shank (15) coaxially extending from the bottom (34), and steps (16) formed between the tip (13) and the bottom (34), **characterized in that**:
the stepped cone (12) comprises a transitional portion (20) formed on one of the steps (16), wherein there is a first length (L1) between the transitional portion (20) and the tip (13), wherein there is a second length (L2) between the transitional portion (20) and the bottom (34);
the stepped cone (12) comprises a first helical groove (21), a second helical groove (22) located opposite to the first helical groove (21), a third helical groove (23) and a fourth helical groove (24) located opposite to the third helical groove (23), wherein the first and second helical grooves (21, 22) are located opposite to each other, wherein the third and fourth helical grooves (23, 24) are located to each other, wherein the first, second, third and fourth helical grooves (21, 22, 23, 24) are evenly cut in the stepped cone (12);
the first and second helical grooves (21, 22) extend from the tip (13) to the bottom (34); and
the third and fourth helical grooves (23, 24) extend from the transitional portion (20) to the bottom (34).

2. The step drill according to claim 1, wherein the first length (L1) is equal to the second length (L2).

3. The step drill according to claim 1, wherein the first length (L1) is larger than the second length (L2).

4. The step drill according to claim 1, wherein the first and second helical grooves (21, 22) get deeper from the tip (13) to the bottom (34), wherein the third and fourth helical grooves (23, 24) get deeper from the transitional portion (20) to the bottom (34).

5. The step drill according to claim 1, wherein the first and second helical grooves (21, 22) get wider from the tip (13) to the bottom (34), wherein the third helical and fourth grooves (23, 24) get wider from the transitional portion (20) to the bottom (34).

6. A step drill comprising a stepped cone (32) formed with a tip (33) and a bottom (34), a shank (35) coaxially extending from the bottom (34), and steps (36) formed between the tip (33) and the bottom (34), **characterized in that**:
the stepped cone (32) comprises a transitional portion (40) formed on one of the steps (36), wherein there is a first length (L3) between the transitional portion (40) and the tip (33), wherein there is a second length (L4) between the transitional portion (40) and the bottom (34);
the stepped cone (32) comprises a first helical groove (41), a second helical groove (42) located opposite to the first helical groove (41), a third helical groove (43) and a fourth helical groove (44) located opposite to the third helical groove (43);
the first helical groove (41) extends from the tip (33) to the bottom (34);
the second helical groove (42) extends from the tip (33) to the transitional portion (40); and
the third and fourth helical grooves (43, 44) extend from the transitional portion (40) to the bottom (34).

7. The step drill according to claim 6, wherein the first length (L3) is equal to the second length (L4).

8. The step drill according to claim 6, wherein the first length (L3) is larger than the second length (L4).

9. The step drill according to claim 6, wherein the first helical groove (31) gets deeper from the tip (13) to the bottom (34), wherein the second helical groove (22) gets deeper from the tip (13) to the transitional portion (20), wherein the third and fourth helical grooves (23, 24) get deeper from the transitional portion (20) to the bottom (34).

10. The step drill according to claim 6 or 9, wherein the first helical groove (21) gets wider from the tip (13) to the bottom (34), wherein the second helical groove (22) gets wider from the tip (13) to the transitional portion (20), wherein the third and fourth helical grooves (23, 24) get wider from the transitional portion (20) to the bottom (34).
